# EUROPÄISCHE PATENTSCHRIFT

(11) **EP 1 691 468 B1**
(45) Veröffentlichungstag und Bekanntmachung des Hinweises auf die Patenterteilung: **16.05.2012**
(21) Anmeldenummer: 06010873.5
(22) Anmeldetag: 21.03.2003
(51) Int. Cl.: H02K 5/22, F04D 13/06, H02K 11/04, H02K 3/52

(54) **Pumpenaggregat**
Pump unit
Unité de pompage

(43) Veröffentlichungstag der Anmeldung: 16.08.2006
(62) Teilanmeldung aus: 03006435.6
(73) Patentinhaber: GRUNDFOS A/S, DK-8850 Bjerringbro (DK)
(72) Erfinder: Andersen, Jorgen, 8361 Hasselager (DK); Staehr, Uffe, 8382 Hinnerrup (DK); Hellegaard, Bodil, 8850 Bjerringbro (DK); Mortensen, Suanne, 8850 Bjerringbro (DK)
(74) Vertreter: Hemmer, Arnd

(56) Entgegenhaltungen:
- EP-A- 0 029 328
- DE-A- 3 803 164
- DE-A- 10 005 505
- DE-A- 19 922 234
- US-A- 5 828 147
- US-A1- 2002 117 914
- US-B1- 6 177 741
- PATENT ABSTRACTS OF JAPAN Bd. 009, Nr. 295 (E-360), 21. November 1985 (1985-11-21) -& JP 60 134748 A (MATSUSHITA DENKO KK), 18. Juli 1985 (1985-07-18)

## Beschreibung

Die Erfindung betrifft ein Umwälzpumpenaggregat zum Einsatz in einer Heizungsanlage oder als Kaltwasserpumpe in der Klimatechnik mit einem elektrischen Antriebsmotor.

Derartige Pumpenaggregate sind beispielsweise als Umwälzpumpen bekannt, wie sie in Heizungsanlagen eingesetzt werden. Diese Pumpenaggregate weisen üblicherweise ein Statorgehäuse auf, in welchem der Elektromotor mit dem Stator angeordnet ist. Der Stator weist eine Vielzahl von in Umfangsrichtung um die Drehachse des Motors verteilten Spulen auf. Beispielsweise können zwölf oder sechzehn Spulen in dem Stator vorgesehen sein. Die einzelnen Spulen weisen jeweils zwei elektrische Anschlussleitungen auf, welche im Inneren des Statorgehäuses elektrisch miteinander verschaltet sind. Die gemeinsamen Anschlussleitungen der miteinander verschalteten Spulen sind aus dem Statorgehöuse nach außen geführt. Üblicherweise ist außen an das Statorgehäuse ein Klemmenkasten angesetzt, in dem die elektrischen Anschlüsse und die Steuerungs- bzw. Regelelektronik der Pumpe untergebracht ist. Die aus dem Statorgehäuse herausgeführten Anschlussleitungen sind in den Klemmenkasten geführt und dort mit den elektrischen Anschlüssen bzw. den elektronischen Bauteilen verbunden.

An den Einbauorten solcher Pumpen sind die Platzverhältnisse häufig beengt, so dass die Pumpen nicht von allen Seiten frei zugänglich sind. Es ist daher bevorzugt, dass der Klemmenkasten der Pumpe so angeordnet ist, dass elektrische Anschlüsse leicht mit dem Klemmenkasten verbunden werden können und an dem Klemmenkasten angebrachte Bedienelemente einsehbar und bedienbar sind. Dazu ist es je nach Einbaulage notwendig, dass der Klemmenkasten an einer bestimmten Seite des Statorgehäuses angebracht ist. Um dies mit ein und demselben Pumpenaggregat verwirklichen zu können, ist beispielsweise aus DE 101 07 248 A1 ein Pumpenaggregat bekannt, bei welchem der Klemmenkasten mit der Motorelektronik in vier verschiedenen Winkelpositionen in axialer Richtung auf die Stirnseite des Statorgehäuses aufsteckbar ist. Dazu sind die üblicherweise am Statorgehäuse vorgesehenen elektrischen Anschlüsse vierfach in identischer Weise jeweils um 90° versetzt zueinander an der Stirnseite des Statorgehäuses ausgebildet. Je nachdem, in welcher der vier möglichen Winkelpositionen der Klemmenkasten auf das Statorgehäuse aufgesteckt wird, kommt ein elektrischer Anschluss bzw. Steckkontakt an dem Klemmenkasten mit einem der vier Anschlüsse an dem Statorgehäuse in Kontakt.

Nachteilig bei dieser Anordnung ist, dass der Klemmenkasten lediglich in vier Winkelpositionen an das Statorgehäuse angesetzt werden kann und dass zur Bereitstellung der vier identischen Anschlüsse eine aufwändige Verdrahtung bzw. Verschaltung im Inneren des Statorgehäuses erforderlich ist. Darüber hinaus liegen die drei nicht genutzten Steckkontakte bzw. Anschlüsse am Statorgehäuse immer frei, so dass hier insbesondere in feuchter Umgebung die Gefahr von Korrosion und Kurzschlüssen gegeben ist.

Bei Kaltwasserpumpen, wie sie beispielsweise im Bereich der Klimatechnik eingesetzt werden, ergibt sich ferner das Problem, dass es zu einer Kondenswasserbildung an der Außenseite des Statorgehäuses kommen kann. Problematisch dabei ist, dass sich das Kondenswasser auch an dem Klemmenkasten oder elektrischen Anschlusselementen niederschlagen kann und ungünstigstenfalls in diese eindringen kann und dort zu Kurzschlüssen führen kann.

DE 199 22 234 A1 offenbart ein Pumpenaggregat mit einem Spaltrohrmotor. Der Motor ist in einem Statorgehäuse angeordnet. Das Statorgehäuse weist nahe seinem dem Pumpenaggregat abgewandten Axialende eine im Inneren verlaufende Trennwand auf, welche das Statorgehäuse in zwei Teile, nämlich den Statorraum sowie einen Anschlussraum zur Anordnung elektrischer Anschluss- und/oder Betriebsmittel trennt. Dabei erstreckt sich die Umfangswandung des Statorgehäuses axial über die genannte Trennwand hinaus, sodass die Umfangswandung des Statorgehäuses den so geschaffenen Anschlussraum umfänglich umgibt. Der Anschlussraum wird axialseitig durch einen angesetzten Deckel verschlossen. Bei dieser Anordnung werden somit die Anschlusselemente in dem Anschlussraum, d. h. im Statorgehäuse, angeordnet. Falls die Pumpe als Kaltwasserpumpe eingesetzt wird, ergibt sich dabei die Problematik, dass sich an der Trennwand im Inneren des Anschlussraumes Kondenswasser bilden kann und zu Kurzschlüssen in den im Anschlussraum angeordneten elektrischen Bauteilen führen kann.

US 2002/0117914 A1 offenbart einen bürstenlosen Gleichstrommotor mit einem Klemmenkasten, der die elektronischen Bauteile enthält. Der Klemmenkasten ist hermetisch abgedichtet, so daß die elektronischen Bauteile vor Umgebungseinflüssen geschützt sind.

Es ist daher Aufgabe der Erfindung, ein verbessertes Pumpenaggregat zu schaffen, bei welchem Defekte aufgrund von Kondenswasserbildung vermieden werden können.

Diese Aufgabe wird durch ein Pumpenaggregat mit den im Anspruch 1 angegebenen Merkmalen gelöst. Bevorzugte Ausführungsformen ergeben sich aus den Unteransprüchen.

Gemäß der Erfindung ist das Pumpenaggregat mit einem Statorgehäuse und einem Anschlusselement zum elektrischen Anschluss der Spulen des Stators versehen, wobei das Anschlusselement außerhalb des Statorgehäuses beabstandet zu dem Statorgehäuse angeordnet ist. Die beabstandete Anordnung des Anschlusselementes zu dem Statorgehäuse ist insbesondere bei Kaltwasserpumpen, wie sie beispielsweise im Bereich der Klimatechnik eingesetzt werden, vorteilhaft. Bei Kaltwasserpumpen kann es zu einer Kondenswasserbildung an der Außenseite des Statorgehäuses kommen. Die beabstandete Anordnung des Anschlusselementes von dem Statorgehäuse hat dabei den Vorteil, dass das Kondenswasser zwischen Statorgehäuse und Anschlusselement abfließen kann, ohne in das Anschlusselement einzudringen. Dadurch kann die Elektrik bzw. Elektronik in dem oder an dem Anschlusselement vor Feuchtigkeit, welche sich an der Oberfläche des Statorgehäuses ansammelt, geschützt werden. Das Anschlusselement tritt bei dieser Ausführungsform nur mit einigen wenigen Befestigungselementen und den elektrischen Anschlusselementen wie Steckkontakte mit dem Statorgehäuse in Kontakt. Dabei können die elektrischen Steckkontakte entsprechend isoliert bzw. gedichtet ausgebildet werden, so dass an diesen Stellen die elektrischen Teile vor Feuchtigkeit geschützt werden. Darüber hinaus können die Öffnungen und Anschlüsse an dem Statorgehäuse von kragenförmigen Vorsprüngen umgeben sein, welche verhindern, dass Feuchtigkeit in die Ausnehmungen bzw. Öffnungen eindringt. Neben dem direkten Schutz vor Feuchtigkeit hat die beabstandete Anordnung des Anschlusselementes den Vorteil einer thermischen Entkopplung von dem Statorgehäuse. Dies bewirkt, dass sich das Anschlusselement nicht in gleicher Weise wie das Statorgehäuse abkühlt, so dass eine Kondenswasserbildung direkt auf dem Anschlusselement oder sich an das Anschlusselement anschließenden Bauteilen verhindert wird.

Weiter bevorzugt ist an dem Anschlusselement ein sich in axialer Richtung von dem Anschlusselement weg erstreckendes Sensorelement ausgebildet, welches in eine der Ausnehmungen des Statorgehäuses einsetzbar ist. Dabei kann das Sensorelement je nachdem, in welcher Winkellage das Anschlusselement an das Statorgehäuse angesetzt wird, in eine der mehreren Ausnehmungen des Statorgehäuses eingesetzt werden. Auf diese Weise können elektrische Anschlüsse für ein im Inneren des Statorgehäuses angeordnetes Sensorelement in verschiedenen Winkelpositionen eingespart werden, und dennoch ist es möglich, das Anschlusselement bzw. einen Klemmenkasten in verschiedenen Winkelpositionen an das Statorgehäuse anzusetzen. Das Sensorelement ist fest mit dem Anschlusselement verbunden, so dass eine einfache und sichere Montage gewährleistet ist. Beispielsweise kann das Sensorelement in einem in axialer Richtung vorspringenden Gehäuseteil des Anschlusselementes angeordnet sein, Dieses Gehäuseteil ist bevorzugt einstückig mit dem Anschlusselement, beispielsweise aus Kunststoff, gefertigt, Der vorspringende Gehäuseteil ist dabei stiftförmig, so dass er ausreichend weit in das Statorgehäuse hineinragen kann, um den Sensor in eine gewünschte Position in der Nähe des Rotors zu bringen, um beispielsweise die Winkelposition und/oder die Drehzahl des Rotors zu erfassen.

Das Anschlusselement ist Teil eines Klemmenkastens. So ist das Anschlusselement direkt als Teil des Klemmenkastens, vorzugsweise einstückig mit diesem ausgebildet. Der Klemmenkasten kann in verschiedenen Winkelpositionen in axialer Richtung an die Stirnseite des Statorgehäuses angesteckt werden, wobei die Elektrik bzw. Elektronik im Inneren des Klemmenkastens direkt die Anschlüsse der einzelnen Spulen, welche aus dem Statorgehäuse herausgeführt sind, elektrisch kontaktiert. Die Verschaltung der einzelnen Spulen miteinander erfolgt dabei im Inneren des Klemmenkastens. Auf diese Weise wird eine sehr einfache Montage der Pumpe am Einbauort ermöglicht. Gleichzeitig wird die Zahl der erforderlichen Bauteile reduziert, weil keine zusätzlichen Elemente zur Verdrahtung bzw. Verschaltung der Spulen miteinander in oder an dem Statorgehäuse vorgesehen werden müssen. Der Klemmenkasten weist an seiner der Stirnseite des Statorgehäuses zugewandten Seite zu den Anschlüssen der Spulen korrespondierende elektrische Anschlüsse auf, welche mit den Anschlüssen an dem Statorgehäuse in Kontakt bringbar sind. Dabei entspricht die Anzahl der Anschlüsse an dem Klemmenkasten der Anzahl der Anschlüsse an dem Statorgehäuse, so dass es im angeschlossenen Zustand keine freien Anschlüsse gibt, welche Umgebungseinflüssen ausgesetzt sind. Dennoch kann der Klemmenkasten in jeder beliebigen Winkelposition, welche sich durch die von der Anordnung der Spulen vorgegebene Winkelteilung ergibt, an das Statorgehäuse angesetzt werden, wobei jeweils ein Anschluss an dem Klemmenkasten mit einem der Anschlüsse an dem Statorgehäuse in Kontakt kommt.

Die Ausgestaltung des Anschlusselementes als Klemmenkasten ist auch hinsichtlich der oben beschriebenen, beabstandeten Anordnung des Anschlusselementes von dem Statorgehäuse von Vorteil. Entsprechend der oben beschriebenen Ausführungsform kann das Anschlusselement von einem Klemmenkasten gebildet sein, welcher beabstandet zu dem Statorgehäuse angeordnet ist. Auf diese Weise ergeben sich für den Klemmenkasten die oben anhand des Anschlusselementes beschriebenen Vorteile hinsichtlich thermischer Entkopplung und Schutz der elektrischen Elemente in dem Klemmenkasten vor Kondenswasser, welches sich auf der Außenseite des Statorgehäuses niederschlägt.

Das erfindungsgemäße Pumpenaggregat weist bevorzugt einen elektrischen Antriebsmotor mit einem Stator auf, welcher in einem Statorgehäuse angeordnet ist. Der Stator weist eine Vielzahl von Spulen auf, welche umfänglich verteilt zu der Drehachse bzw. einem Rotor des Antriebsmotors angeordnet sind. Ein solcher segmentierter Stator, bei welchem einzelne Spulen jeweils auf einen Polschenkel eines sternförmigen Statorrings aufgesetzt sind, ist beispielsweise aus dem deutschen Gebrauchsmuster DE 202 04 507 bekannt. Der Rotor ist bevorzugt ein Permanentmagnetrotor. Jede der Vielzahl von Spulen weist vorzugsweise zumindest einen elektrischen Anschluss auf. Der elektrische Anschluss jeder Spule kann ein- oder mehrpolig, beispielsweise zweipolig, ausgebildet sein. Dabei ist der elektrische Anschluss jeder einzelnen Spule bevorzugt einzeln aus dem Statorgehäuse herausgeführt. Dies bedeutet, dass zumindest ein Teil der elektrischen Verschaltung der einzelnen Spulen miteinander nicht im Inneren des Statorgehäuses, sondern außerhalb des Statorgehäuses erfolgen kann. Jede der einzelnen Spulen weist somit zumindest einen elektrischen Anschluss an der Außenseite des Statorgehäuses auf. Dabei sind die elektrischen Anschlüsse der einzelnen Spulen vorzugsweise gedichtet durch die Gehäusewandung des Statorgehäuses hindurchgeführt, so dass an der Stelle, an der die Anschlüsse aus dem Statorgehäuse austreten, keine Feuchtigkeit in das Innere des Statorgehäuses eindringen kann. Diese Anordnung, bei welcher die elektrischen Anschlüsse der einzelnen Spulen aus dem Statorgehäuse herausgeführt werden, ermöglicht, dass ein Klemmenkasten bzw. ein Elektronikmodul in einfacher Weise in mehreren Winkelpositionen an das Statorgehäuse angesetzt bzw. angesteckt werden kann, da keine Beschränkungen durch vorgegebene Verschaltungen oder Verdrahtungen im Inneren des Pumpengehäuses bestehen.

Bevorzugt ist jeder elektrische Anschluss jeweils axialseitig, vorzugsweise an einer Winkelposition der jeweils zugehörigen Spule, aus dem Statorgehäuse herausgeführt. Die axiale Herausführung der elektrischen Anschlüsse aus dem Statorgehäuse bewirkt, dass die Anschlüsse außerhalb des Statorgehäuses an dessen Stirnseite angeordnet sind. Dies schafft die Möglichkeit, ein Element zur Verschaltung oder einen Klemmenkasten axialseitig an das Statorgehäuse anzusetzen bzw. aufzustecken. Wenn die elektrischen Anschlüsse an der jeweiligen Winkelposition der zugehörigen Spule aus dem Statorgehäuse herausgeführt werden, bewirkt dies, dass im Inneren des Statorgehäuses nur kurze Anschlussleitungen erforderlich sind.

Weiter bevorzugt sind die elektrischen Anschlüsse an der axialen Stirnseite, d. h. an der dem Pumpenrad abgewandten Stirnseite des Statorgehäuses, in ihren Winkelpositionen gleichmäßig zueinander beabstandet angeordnet. Dies ist insbesondere dann der Fall, wenn auch die Spulen gleichmäßig über den Umfang verteilt sind und die elektrischen Anschlüsse an den Winkelpositionen der jeweils zugehörigen Spule aus dem Statorgehäuse herausgeführt sind. Diese gleichmäßige Anordnung der Anschlüsse an der Stirnseite des Statorgehäuses ermöglicht, ein Anschlusselement zum Verschalten der Spulen und/oder einen Klemmenkasten sehr einfach in verschiedenen Winkelpositionen an das Statorgehäuse anzusetzen, da entsprechende Kontakte an dem Anschlusselement bzw. dem Klemmenkasten mit beliebigen elektrischen Anschlüssen der Spulen in Kontakt kommen können.

Die elektrischen Anschlüsse enden bevorzugt in zumindest einem Steckkontakt an der axialen Stirnseite des Statorgehäuses. Dies ermöglicht eine leichte Kontaktierbarkeit der elektrischen Anschlüsse mit einem korrespondierenden Steckkontakt an einem Anschlusselement oder einem Klemmenkasten, Die Steckkontakte sind je nach Ausgestaltung der elektrischen Anschlüsse ein- oder mehrpolig ausgebildet, d.h. sie haben einen oder mehrere elektrische Kontakte. Im Falle eines zweipoligen elektrischen Anschlusses kann der Anschluss ein Steckkontaktpaar aufweisen, wobei in jedem der beiden Steckkontakte des Paares jeweils einer der elektrischen Pole des Anschlusses angeordnet ist. Die Steckkontakte sind vorzugsweise so ausgebildet, dass eine gegen Feuchtigkeit abgedichtete Verbindung geschaffen wird.

Erfindungsgemäß sind die elektrischen Anschlüsse der einzelnen Spulen bevorzugt außerhalb des Statorgehäuses miteinander verschaltet. Dies ermöglicht eine größere Flexibilität beim Verschalten der einzelnen Spulen miteinander, da die Verschaltung nicht fest im Statorgehäuse vorgenommen werden muss. Vielmehr kann die Verschaltung durch entsprechende Verschaltungselemente, welche von außen an das Statorgehäuse angesetzt werden, vorgenommen werden und verschiedenen Einsatzzwecken angepasst werden. Insbesondere kann die Verschaltung so erfolgen, dass die elektrischen Anschlussleitungen des gesamten Pumpenaggregates in einer änderbaren Winkelposition aus dem Pumpenaggregat herausgeführt werden können. Auch ein Klemmenkasten kann in verschiedenen Positionen bzw. Lagen an das Statorgehäuse angesetzt werden, da die Position des elektrischen Anschlusses des Stators nicht durch eine Verschaltung im Inneren des Statorgehäuses fest vorgegeben ist.

Vorzugsweise weist das Statorgehäuse, bevorzugt an seiner axialen Stirnseite, mehrere in unterschiedlichen Winkelpositionen angeordnete Ausnehmungen zur Aufnahme eines Sensorelementes auf. Dies ermöglicht, dass ein Sensorelement an verschiedenen Winkelpositionen von außen in das Statorgehäuse eingesetzt werden kann. Es ergeben sich so flexiblere Anschlussmöglichkeiten des Stators an externe elektrische bzw. elektronische Bauteile, da Anschlüsse eines Sensorelementes nicht an einer vorgegebenen Stelle aus dem Statorgehäuse herausgeführt werden müssen, sondern das Sensorelement je nach Einsatzzweck an verschiedenen Winkelpositionen des Statorgehäuses in eine der Ausnehmungen eingesetzt werden kann. Dabei sind die Ausnehmungen vorzugsweise so ausgebildet, dass zumindest im eingesetzten Zustand des Sensorelementes das Statorgehäuse an dieser Stelle abgedichtet ist, so dass keine Feuchtigkeit in das Statorgehäuse eindringen kann. Die Ausnehmungen, in welche kein Sensorelement eingesetzt ist, werden vorzugsweise durch ein korrespondierendes Bauteil des Anschlusselementes abgedichtet.

Weiter bevorzugt sind die Ausnehmungen zur Aufnahme eines Positionssensors, insbesondere eines Magnetfeldsensors zwischen den Spulen des Statorgehäuses ausgebildet. Ein solcher Positionssensor kann zum einen als Drehzahlaufnehmer, zum anderen zur Bestimmung der Rotorposition dienen. Dies erfolgt bevorzugt durch Erfassung der Änderungen des von dem Rotor erzeugten Magnetfeldes. Dazu kann das Sensorelement beispielsweise ein bekannter Hall-Sensor sein. Gemäß dieser bevorzugten Ausführungsform sind an verschiedenen Winkelpositionen des Statorgehäuses Ausnehmungen derart angeordnet, dass ein von außen in die Ausnehmung eingesetztes Sensorelement derart zwischen den Spulen positioniert wird, dass es das Magnetfeld des Rotors erfassen kann.

Gemäß einer besonders bevorzugten Ausführungsform ist ein Anschlusselement vorgesehen, welches von außen, vorzugsweise in axialer Richtung, an das Statorgehäuse ansetzbar ist und welches die elektrischen Anschlüsse der einzelnen Spulen miteinander verschaltet. Dies ermöglicht eine einfache Montage des Stators, da die elektrische Verschaltung der einzelnen Spulen erst nach Montage des Stators im Inneren des Statorgehäuses erfolgt. Ferner kann das Anschlusselement je nach Einsatzzweck unterschiedlich ausgebildet sein, so dass verschiedene Arten der Verschaltung der einzelnen Spulen miteinander erreicht werden können, ohne den Stator zu ändern. Es muss lediglich ein anderes Anschlusselement oder dasselbe Anschlusselement in einer anderen Winkelposition an das Statorgehäuse angesetzt werden, wobei die elektrischen Anschlüsse der Spulen, welche aus dem Statorgehäuse herausgeführt sind, dabei in der jeweils gewünschten Weise miteinander verschaltet werden. Darüber hinaus dient das Anschlusselement zur Verbindung mit einem externen elektrischen Anschluss bzw. weiteren elektronischen Bauelementen zur Steuerung bzw. Regelung des Antriebsmotors.

Dazu verbindet das Anschlusselement vorzugsweise die einzelnen Spulen elektrisch mit elektrischen Anschlüssen in einem Klemmenkasten des Pumpenaggregates. Über den Klemmenkasten wird das Pumpenaggregat mit einer Stromversorgung oder externen Steuerungseinrichtungen verbunden. Ferner können in dem Klemmenkasten elektronische Bauelemente zur Regelung bzw. Steuerung des Pumpenaggregates angeordnet sein.

Weiter bevorzugt ist in dem Anschlusselement zu jedem Anschluss der Spulen ein korrespondierendes Kontaktelement vorgesehen. Beispielsweise können in dem Anschlusselement entsprechende Steckkontakte ausgebildet sein, welche mit den an der axialen Stirnseite des Statorgehäuses angeordneten Steckkontakten in Eingriff treten können. Dabei wird eine elektrische Verbindung jedes einzelnen elektrischen Anschlusses einer Spule über die Steckkontakte mit jeweils einem Anschluss in dem Anschlusselement hergestellt. Die Kontaktelemente sind korrespondierend zu der Ausgestaltung der Anschlüsse der Spulen ein- oder mehrpolig, beispielsweise zweipolig, ausgebildet, d.h. sie weisen eine entsprechende Anzahl elektrischer Kontakte auf. Wenn die Steckkontakte eines zweipoligen Anschlusses als Steckkontaktpaar ausgebildet sind, sind an dem Anschlusselement entsprechende Steckkontaktpaare angeordnet, welche mit den Steckkontaktpaaren an dem Statorgehäuse in Eingriff treten können. Diese Ausgestaltung ermöglicht ein einfaches Aufstecken des Anschlusselementes auf das Statorgehäuse, wobei gleichzeitig die elektrischen Anschlüsse der Spulen kontaktiert werden.

Das Anschlusselement ist vorzugsweise in jeder beliebigen, durch die Anzahl der elektrischen Anschlüsse bzw. der Spulen vorgegebenen Winkelposition an das Statorgehäuse ansetzbar. Das bedeutet, dass die Anzahl der möglichen Winkelpositionen, in denen das Anschlusselement an das Statorgehäuse ansetzbar ist, durch die Anzahl der in dem Stator vorgesehenen Spulen vorgegeben ist. Wenn beispielsweise sechs Spulen über den Umfang verteilt vorgesehen sind, kann das Anschlusselement in sechs verschiedenen, um jeweils 60° zueinander versetzten Winkelpositionen an das Statorgehäuse angesetzt werden. Dabei ist es egal mit welchem der Anschlüsse an dem Statorgehäuse die zugehörigen Anschlüsse an dem Anschlusselement jeweils in Kontakt kommen, da alle Spulen und Anschlüsse identisch ausgebildet sind. So kann das Anschlusselement und damit ein externer elektrischer Anschluss oder ein Klemmenkasten in nahezu jeder beliebigen Winkelposition an dem Statorgehäuse angebracht werden. Die Anzahl der Winkelpositionen wird lediglich durch die Anzahl der Spulen begrenzt. Es sind keine zusätzlichen Verdrahtungen im Inneren des Statorgehäuses erforderlich, um diese Flexibilität bei der Kontaktierung des Stators zu erreichen.

Nachfolgend wird die Erfindung beispielhaft anhand der beigefügten Figuren beschrieben. In diesen zeigt:
- Fig. 1: eine perspektivische Explosionsansicht des Statorgehäuses und des Klemmenkastens mit Blick in das Innere des Klemmenkastens,
- Fig. 2: eine weitere perspektivische Explosionsansicht des Statorgehäuses und des Klemmenkastens mit Blick auf die Stirnseite des Statorgehäuses und
- Fig. 3: eine Schnittansicht des Statorgehäuses mit angesetztem Klemmenkasten.

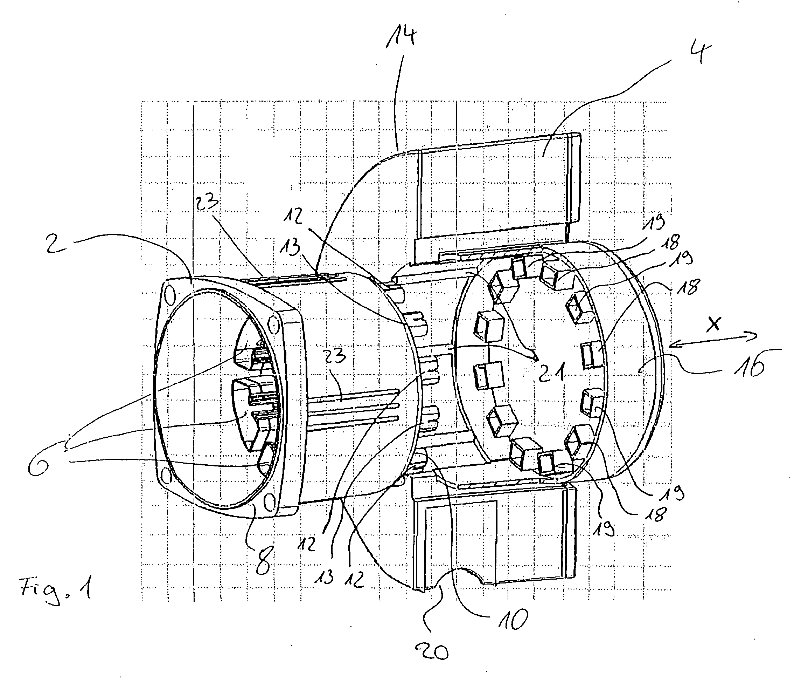

Fig. 1 zeigt eine perspektivische Explosionsansicht eines Statorgehäuses 2 eines Pumpenaggregates und eines zugehörigen Klemmenkastens 4. Im Inneren des Statorgehäuses 2 sind Aufnahmen 6 zur Aufnahme der Statorspulen ausgebildet, welche hier nicht gezeigt sind. Im Inneren des Statorgehäuses 2 werden die Statorspulen sowie der Rotor angeordnet. Das axial vordere Ende des Statorgehäuses 2 ist als Flansch 8 zur Verbindung mit einem Pumpengehäuse ausgebildet. An der axial hinteren Stirnseite 10 des Statorgehäuses 2 sind in einer ringförmigen Anordnung elektrische Anschlüsse in Form von Steckkontakten 12 und 13 ausgebildet. Zu diesen Steckkontakten 12 und 13 sind elektrische Anschlüsse der einzelnen Statorspulen, welche im Inneren des Statorgehäuses 2 angeordnet werden, in axialer Richtung aus dem Statorgehäuse 2 herausgeführt. Jede Spule weist einen zweipoligen elektrischen Anschluss auf, wobei der eine Pol jeder Spule jeweils in einem Steckkontakt 12 und der zweite Pol in einem Steckkontakt 13 endet. Der elektrische Anschluss jeder Spule weist somit ein Steckkontaktpaar bestehend aus Steckkontakten 12 und 13 auf. Alternativ kann auch jeweils ein Pol des elektrischen Anschlusses einer Spule im Inneren des Statorgehäuses 2 direkt mit einem Anschlusspol einer zugehörigen, gegenüberliegenden zweiten Spule verbunden sein. Auf diese Weise werden im Inneren des Statorgehäuses 2 Spulenpaare gebildet, wobei an jeweils einer der Spulen des Spulenpaares ein elektrischer Anschlusspol direkt aus dem Statorgehäuse 2 in einen Steckkontakt 12 oder 13 geführt wird. In diesem Fall wären dann nur 6 Steckkontakte 12 oder 13 an dem Statorgehäuse vorhanden.

Die Steckkontakte 12 und 13 sind an der Stirnseite 10 des Statorgehäuses 2 kreisförmig angeordnet, wobei die Steckkontaktpaare bestehend aus den Steckkontakten 12 und 13 gleichmäßig zueinander beabstandet sind. Der Abstand zwischen den einzelnen Steckkontaktpaaren 12, 13 ergibt sich aus der Anzahl der Spulen und damit der Anzahl der Steckkontaktpaare 12, 13. Im gezeigten Beispiel sind sechs Spulen und entsprechend sechs Steckkontakte 12 und sechs Steckkontakte 13 vorgesehen. Die Steckkontaktpaare 12, 13 sind daher immer in einem Winkel von 60° zueinander angeordnet. Sollten beispielsweise acht Spulen und acht Steckkontakte 12 sowie acht Steckkontakte 13 vorgesehen sein, würde sich ein Winkelabstand von 45° zwischen den einzelnen Steckkontaktpaaren 12, 13 ergeben. Diese gleichmäßig beabstandete Anordnung der Steckkontakte 12 ermöglicht, dass der Klemmenkasten 4 in jeder sich durch die Anzahl der Spulen bzw. Steckkontaktpaare 12, 13 ergebenden Winkelposition an das Statorgehäuse 2 angesteckt werden kann. Das heißt, im gezeigten Beispiel kann der Klemmenkasten 4 in 60°-Schritten gedreht in sechs verschiedenen Winkelpositionen an das Statorgehäuse 2 angesetzt werden, Im Fall, dass mehr Spulen und somit mehr Steckkontaktpaare 12, 13 vorgesehen sind, kann der Klemmenkasten 4 entsprechend in mehr verschiedenen Winkelpositionen an das Statorgehäuse 2 angesteckt werden.

Der Klemmenkasten 4 weist einen bogenförmigen Teil 14 auf, welcher sich über einen Halbkreis erstreckt und umfänglich zu dem Statorgehäuse 2 angeordnet wird. Am hinteren Ende ist im Inneren des bogenförmigen Teils 14 ein kreisförmiger Gehäuseteil 16 des Klemmenkastens 4 ausgebildet, welcher ein Anschusselement 16 bildet. Der bogenförmige Teil 14 und der kreisförmige Teil 16 sind vorzugsweise einstückig aus Kunststoff ausgebildet. An der Stirnseite des Teils 16, welche dem Statorgehäuse 2 zugewandt ist, sind im gezeigten Ausführungsbeispiel sechs Steckkupplungen 18 und sechs Steckkupplungen 19 ausgebildet, welche entsprechend der Steckkontakte 12 und 13 ebenfalls kreisförmig angeordnet sind. Dabei sind die Paare von Steckkupplungen 18 und 19 so angeordnet, dass sie den gleichen Winkelabstand zueinander wie die Steckkontaktpaare 12, 13 zueinander haben. Gleichzeitig entspricht der Durchmesser des Kreises, auf dem die Steckkupplungen 18 und 19 angeordnet sind, dem Durchmesser des Kreises, auf dem die Steckkontakte 12 und 13 angeordnet sind. Dies ermöglicht, dass die Steckkontakte 12 mit den Steckkupplungen 18 und die Steckkontakte 13 mit den Steckkupplungen 19 in Eingriff treten können, wenn der Klemmenkasten 4 in axialer Richtung X auf das Statorgehäuse 2 aufgesteckt wird. Dabei tritt jeweils ein Steckkontakt 12 mit einer der Steckkupplungen 18 und ein Steckkontakt 13 mit einer Steckkupplung 19 in Eingriff. Dabei ist es jedoch egal, welches der Paare von Steckkontakten 12, 13 mit welcher der Paare von Steckkupplungen 18, 19 in Eingriff tritt, da alle Steckkontakte 12 und Steckkupplungen 18 bzw. alle Steckkontakte 13 und Steckkupplungen 19 jeweils identisch zueinander ausgebildet sind. Ebenfalls sind die elektrisch mit den Steckkontakten 12 verbundenen einzelnen Spulen identisch zueinander ausgebildet. Dies ermöglicht, dass der Klemmenkasten 4 in jeder der sich durch die Anordnung der Steckkontakte 12 ergebenden Winkelpositionen, d. h. im vorliegenden Beispiel jeder der sechs möglichen Winkelpositionen an das Statorgehäuse 2 angesteckt werden kann. So kann das Pumpenaggregat sehr einfach an verschiedene Einbauorte angepasst werden. Der Klemmenkasten kann immer so an das Statorgehäuse 2 angesetzt werden, dass Anschluss- und/oder Bedienelemente an dem Klemmenkasten am jeweiligen Einbauort des Pumpenaggregates gut zu erreichen und/oder einsehbar sind.

Um zu Verhindern, dass die Steckkupplungen 18 mit den Steckkontakten 13 anstelle der Steckkontakte 12, d.h. in einer Winkellage zwischen den genannten 60° Schritten in Eingriff treten, sind an dem Klemmenkasten 4 Vorsprünge 22 und an dem Statorgehäuse 2 korrespondierende Rippen oder Eingriffselemente 23 an vorgegeben Winkelpositionen ausgebildet, welche eine Verbindung von Klemmenkasten 4 und Statorgehäuse nur in den vorbestimmten Winkellagen zulassen. Alternativ können die Steckkontakte 12 und 13 und die zugehörigen Steckkupplungen 18 und 19 jeweils eine andere geometrische Form aufweisen, so dass die Steckkontakte 12 nur mit den Steckkupplungen 18 und die Steckkontakte 13 nur mit den Steckkupplungen 19 in Eingriff treten können. Ferner kann der Abstand zwischen zwei als Paar zusammengehörenden Steckkontakten 12 und 13 bzw. Steckkupplungen 18 und 19 geringer oder größer ausgebildet werden als der Abstand zu den angrenzenden Paaren von Steckkontakten 12, 13 bzw., Steckkupplungen 18, 19.

Die elektrische Verschaltung der Spulen erfolgt nicht im Statorgehäuse 2 selbst, sondern im Klemmenkasten 4, welcher somit ein Anschlusselement für die Spulen bildet. Dies führt wiederum zu einem vereinfachten Aufbau des Statorgehäuses 2 und der im Inneren angeordneten Spulen. Im Klemmenkasten 4 sind neben der elektrischen Verschaltung der Spulen in üblicher Weise elektrische und elektronische Bauteile zum Anschluss und zur Steuerung der Pumpe angeordnet. Der Klemmenkasten 4 weist an seiner Außenseite ferner einen elektrischen Anschluss 20 auf, über welchen das Pumpenaggregat mit einer externen Stromversorgung verbunden wird.

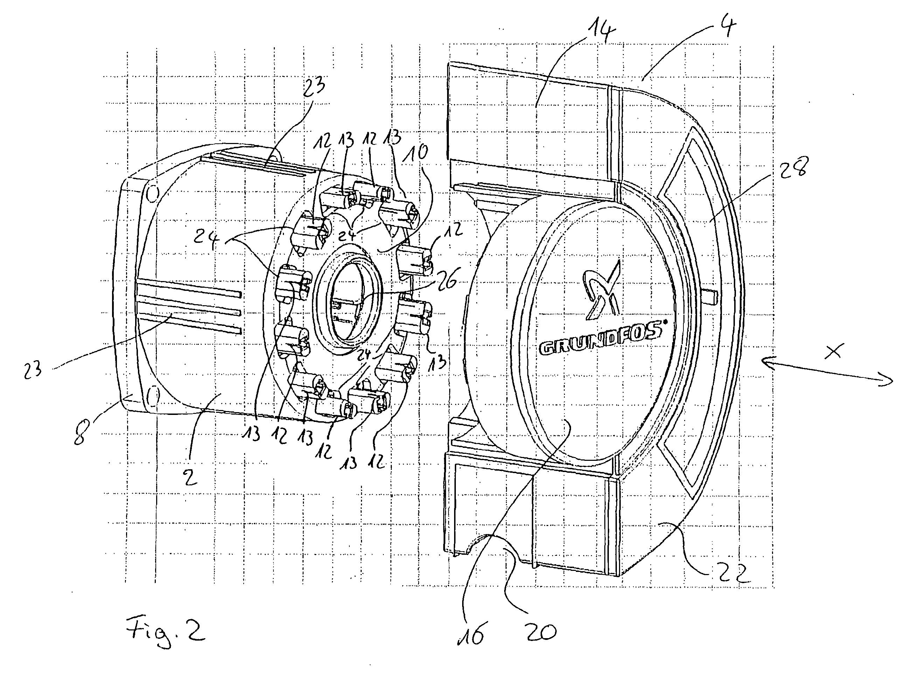

Fig. 2 zeigt das Statorgehäuse 2 und den Klemmenkasten 4 in einer anderen Blickrichtung mit Blick auf die axiale Stirnseite 22 des Klemmenkastens 4 sowie die Stirnseite 10 des Statorgehäuses 2. In der Stirnseite 10 des Statorgehäuses 2 ist eine kreisförmige Anordnung von Durchgangslöchern 24 ausgebildet, durch welche sich die Steckkontakte 12 und 13 vom Inneren des Statorgehäuses 2 nach außen erstrecken. Die Steckkontakte 12 und 13 sind dabei vorzugsweise einstückig mit den Aufnahmen 6 (siehe Fig. 1) für die Spulen ausgebildet, beispielsweise aus Kunststoff gegossen. Dabei sind die Steckkontakte 12 und 13 in die Durchgangslöcher 24 gedichtet eingesetzt, so dass durch die Durchgangslöcher 24 keine Feuchtigkeit in das Innere des Statorgehäuses 2 eindringen kann. Dazu kann an der Innenseite der Stirnseite 10 eine zentrale Dichtung angeordnet sein. Alternativ können die Steckkontakte 12 einstückig mit dem Statorgehäuse 2 ausgebildet sein und lediglich elektrische Anschlüsse durch das Statorgehäuse 2 hindurch nach außen geführt sein.

Das Statorgehäuse 2 weist an der Stirnseite 10 in bekannter Weise noch eine zentrale Öffnung 26 zur Aufnahme und Lagerung einer Motorwelle auf. An der Stirnseite 22 des Klemmenkastens 4 sind ferner, hier nur schematisch dargestellt, Bedienelemente 28 angeordnet.

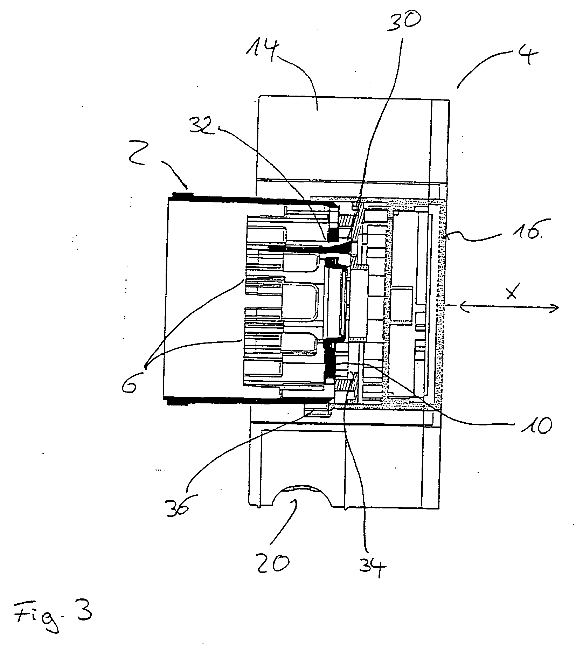

Fig. 3 zeigt eine Schnittansicht des Statorgehäuses 2 mit aufgesetztem Klemmenkasten 4 gemäß Figuren 1 und 2.

Wie in Fig. 3 zu erkennen ist, erstreckt sich ausgehend von dem Teil 16 in axialer Richtung X ein Sensorelement 30 in eine Öffnung 32 an der Stirnseite 10 des Statorgehäuses 2. Das Sensorelement 30 ist ein Drehzahl- oder Positionsaufnehmer, beispielsweise in Form eines Hall-Sensors, Die Öffnung 32 in dem Statorgehäuse 2 ist so ausgebildet, dass das stabförmige Sensorelement, welches sich in axialer Richtung von der Seite des Teils 16 weg erstreckt, welche der Stirnseite 10 des Statorgehäuses 2 zugewandt ist, zwischen den Spulen (hier nicht gezeigt) in der Nähe eines Rotors angeordnet wird. In dieser Position kann das Sensorelement 30 Drehzahl und/oder Winkelstellung des Rotors erfassen. Erfindungsgemäß sind mehrere Öffnungen 32 (hier nicht gezeigt) an regelmäßig zueinander beabstandeten Winkelpositionen in der Stirnseite 10 ausgebildet. Dies ermöglicht, dass auch ein Klemmenkasten 4 mit einem Sensorelement 30 in verschiedenen Winkelpositionen an das Statorgehäuse 2 angesteckt werden kann. Die Anzahl der Winkelpositionen, in denen der Klemmenkasten 4 mit dem Statorgehäuse 2 verbunden werden kann, hängt von der Anzahl der Öffnungen 32 ab. Dabei muss die Anzahl der Öffnungen 32 auf die Anzahl der Spulen bzw. Paare von Steckkontakten 12, 13 und Steckkupplungen 18, 19 abgestimmt sein, d. h. die Anzahl der Steckkontaktpaare 12, 13 muss ein ganzzahliges Vielfaches der Anzahl der Öffnungen 32 sein. Bevorzugt sind gleich viele Öffnungen 32 wie Steckkontaktpaare 12, 13 (d. h. im vorliegenden Beispiel sechs Öffnungen 32 (hier nicht gezeigt)) vorgesehen, damit der Klemmenkasten 4 in der maximal möglichen Anzahl von unterschiedlichen Winkelpositionen bezüglich der axialen Richtung bzw. Längsachse X mit dem Statorgehäuse 2 verbunden werden kann.Die Öffnungen 32 sind so ausgebildet, dass durch sie keine Feuchtigkeit in das Innere des Statorgehäuses 2 eindringen kann. Dazu können entsprechende Dichtungselemente vorgesehen sein

Fig. 3 zeigt einen weiteren wesentlichen Aspekt der Erfindung. Gemäß der Erfindung ist der Teil 16 in axialer Richtung X beabstandet zu der Stirnseite 10 des Statorgehäuses 2 angeordnet, so dass in axialer Richtung zwischen dem Klemmenkasten 4 und der Stirnseite 10 des Statorgehäuses 2 eine Abstandskammer 34 ausgebildet wird. Dabei tritt der Teil 16 bzw. das Anschlusselement 16 des Klemmenkastens 4 mit der Stirnseite 10 des Statorgehäuses 2 lediglich über die Steckkontakte 12, 13 bzw. die Steckkupplungen 18, 19 in Kontakt und ist ansonsten von dem Statorgehäuse 2 beabstandet. Dies bewirkt eine thermische Entkopplung des Klemmenkastens 4 von dem Statorgehäuse 2. Zur Verbesserung dieser thermischen Entkopplung ist bevorzugt auch der umfängliche Teil 14 des Klemmenkastens 4 radial von dem Statorgehäuse 2 beabstandet. Auf diese Weise wird ein Wärmeübergang von dem Statorgehäuse 2 auf den Klemmenkasten 4 verhindert, was insbesondere beim Einsatz des Pumpenaggregates als Kaltwasserpumpe wichtig ist. Bei Kaltwasserpumpen kann es zu einem Niederschlag von Kondenswasser an der Außenseite des Statorgehäuses 2 kommen, da dieses durch das geförderte Fluid gekühlt wird. Durch die beabstandete Anordnung des Klemmenkastens 4 wird der Klemmenkasten so weit thermisch entkoppelt, dass er sich nicht gemeinsam mit dem Statorgehäuse 2 abkühlt. Auf diese Weise kann ein Niederschlag von Kondenswasser an dem Klemmenkasten 4, welcher die elektronischen und elektrischen Bauteile zur Steuerung und Regelung der Pumpe enthält, verhindert werden. Darüber hinaus kommt der Klemmenkasten 4 auch nicht direkt mit Kondenswasser, welches sich möglicherweise an der Außenseite des Statorgehäuses 2 niederschlägt, in Kontakt. Damit Kondenswasser, welches sich an der Stirnseite 10 des Statorgehäuses 2 niederschlägt, abfließen kann, ist an der vertikal unteren Seite am Innenumfang des Teils 14 des Klemmenkastens 4 ein Entwässerungskanal 36 ausgebildet, welcher mit der Abstandskammer 34 in Verbindung steht.

Die beabstandete Anordnung des Klemmenkastens von dem Statorgehäuse 2 in dem gezeigten Ausführungsbeispiel ist nicht unbedingt auf die Kombination mit der erfindungsgemäßen Anordnung der Steckkontakte 12 beschränkt, vielmehr kann die beabstandete Anordnung von Klemmenkasten und Statorgehäuse 2 zueinander auch bei anderen Pumpenaggregaten eingesetzt werden, welche beispielsweise eine elektrische Verschaltung der Spulen im Inneren des Statorgehäuses 2 aufweisen.

### Bezugszeichenliste

- 2 -: Statorgehäuse
- 4 -: Klemmenkasten
- 6 -: Aufnahme
- 8 -: Flansch
- 10 -: Stirnseite
- 12, 13 -: Steckkontakte
- 14 -: bogenförmiger Teil
- 16 -: kreisförmiger Teil, Anschlusselement
- 18, 19 -: Steckkupplungen
- 20 -: elektrischer Anschluss
- 21: Vorsprünge
- 22 -: Stirnseite
- 23: Eingriffsmittel
- 24 -: Durchgangslöcher
- 26 -: Öffnung
- 28 -: Bedienelemente
- 30 -: Sensorelement
- 32 -: Öffnung
- 34 -: Abstandskammer
- 36 -: Entwässerungskanal
- X -: axiale Richtung

## Patentansprüche

1. Umwälzpumpenaggregat zum Einsatz in einer Heizungsanlage oder als Kahltwasserpumpe in der Klimatechnik mit einem Statorgehäuse (2) und einem Anschlusselement (16) zum elektrischen Anschluss der Spulen des Stators, wobei das Anschlusselement (16) Teil eines Klemmenkastens (4) ist, welcher die elektronischen und elektrischen Bauteile zur Steuerung und Regelung der Pumpe enthält, **dadurch gekennzeichnet, dass** der Klemmenkasten (4) außerhalb des Statorgehäuses derart beabstandet zu dem Statorgehause (2) angeordnet ist, dass in axialer Richtung zwischen einer Stirnseite (10) des Statorgehäuses (2) und dem Anschlusselement (16) eine Abstandskammer (34) ausgebildet ist und dass Kondenswasser zwischen Statorgehäuse (2) und Anschlusselement (16) abfließen kann, ohne in das Anschlusselement (16) einzudringen.

2. Umwälzpumpenaggregat nach Anspruch 1, **dadurch gekennzeichnet, dass** an dem Anschlusselement (16) ein sich in axialer Richtung von dem Anschlusselement (16) weg erstreckendes Sensorelement (30) ausgebildet ist, welches in eine der Ausnehmungen (32) des Statorgehäuses (2) einsetzbar ist.

3. Umwälzpumpenaggregat nach einem der vorangehenden Ansprüche, **dadurch gekennzeichnet, dass** der Klemmenkasten (4) in axialer Richtung auf das Statorgehäuse (2) zum elektrischen Anschluss des Pumpenaggregates aufsteckbar ist.

4. Umwälzpumpenaggregat nach einem der vorgenannten Ansprüche, **dadurch gekennzeichnet, dass** ein elektrischer Antriebsmotor vorgesehen ist, welcher einen in einem Statorgehäuse (2) angeordneten Stator mit einer Vielzahl von Spulen mit jeweils zumindest einem elektrischen Anschluss (12) aufweist, wobei der zumindest eine elektrische Anschluss (12) jeder einzelnen Spule aus dem Statorgehäuse (2) herausgeführt sind.

5. Umwälzpumpenaggregat nach Anspruch 4, **dadurch gekennzeichnet, dass** jeder elektrische Anschluss (12) jeweils axialseitig vorzugsweise an einer Winkelposition der jeweils zugehörigen Spule aus dem Statorgehäuse (2) herausgeführt ist.

6. Umwälzpumpenaggregat nach Anspruch 5, **dadurch gekennzeichnet, dass** die elektrischen Anschlüsse (12) an der axialen Stirnseite (10) des Statorgehäuses (2) in ihren Winkelpositionen gleichmäßig zueinander beabstandet angeordnet sind.

7. Umwälzpumpenaggregat nach einem der vorangehenden Ansprüche 4 bis 6, **dadurch gekennzeichnet, dass** die elektrischen Anschlüsse (12) jeweils in zumindest einem Steckkontakt (12) an der axialen Stirnseite (10) des Statorgehäuses (2) enden.

8. Umwälzpumpenaggregat nach einem der vorangehenden Ansprüche 4 bis 7, **dadurch gekennzeichnet, dass** die elektrischen Anschlüsse (12) der einzelnen Spulen außerhalb des Statorgehäuses (2) miteinander verschaltet sind.

9. Umwälzpumpenaggregat nach einem der vorangehenden Ansprüche 4 bis 8, **dadurch gekennzeichnet, dass** das Statorgehäuse (2) bevorzugt an seiner axialen Stirnseite (10) mehrere, in unterschiedlichen Winkelpositionen angeordnete Ausnehmungen (32) zur Aufnahme eines Sensorelementes (30) aufweist.

10. Umwälzpumpenaggregat nach Anspruch 9, **dadurch gekennzeichnet, dass** die Ausnehmungen (32) zur Aufnahme eines Positionssensors, insbesondere eines Magnetfeldsensors, zwischen den Spulen des Stators ausgebildet sind.

11. Umwälzpumpenaggregat nach einem der Ansprüche 4 bis 10, **dadurch gekennzeichnet, dass** das Anschlusselement (16) von außen vorzugsweise in axialer Richtung (X) an das Statorgehäuse (2) ansetzbar ist und welches die elektrischen Anschlüsse (12) der einzelnen Spulen miteinander verschaltet.

12. Umwälzpumpenaggregat nach einem der vorangehenden Ansprüche, **dadurch gekennzeichnet, dass** das Anschlusselement (16) die einzelnen Spulen elektrisch mit elektrischen Anschlüssen in einem Klemmenkasten (4) des Pumpenaggregates verbindet.

13. Umwälzpumpenaggregat nach einem der vorangehenden Ansprüche, **dadurch gekennzeichnet, dass** in dem Anschlusselement (16) zu jedem Anschluss (12) der Spulen ein korrespondierendes Kontaktelement (18) vorgesehen ist.

14. Umwälzpumpenaggregat nach einem der vorangehenden Ansprüche, **dadurch gekennzeichnet, dass** das Anschlusselement (16) in jeder beliebigen, durch die Anzahl der elektrischen Anschlüsse (12) bzw. der Spulen vorgegebenen Winkelposition an das Statorgehäuse ansetzbar ist.

## Claims

1. A circulation pump assembly for the application in a heating installation or as a cold water pump in air-conditioning technology, with a stator housing (2) and with a connection element (16) for the electrical connection of the coils of the stator, wherein the connection element (16) is part of a terminal box (4) which contains the electronic and electrical components for the control and regulation of the pump, **characterised in that** the terminal box (4) is arranged outside the stator housing in a manner distanced to the stator housing (2) such that a spacer chamber (34) is formed in the axial direction between an end-side (10) of the stator housing (2) and the connection element (16) and that condensed water may flow away between the stator housing (2) and the connection element (16), without penetrating into the connection element (16).

2. A circulation pump assembly according to claim 1, **characterised in that** a sensor element (30) extending in the axial direction away from the connection element (16) is formed on the connection element (16) and may be inserted into one of the recesses (32) of the stator housing (2).

3. A circulation pump assembly according to one of the preceding claims, **characterised in that** the terminal box (4) may be stuck onto the stator housing (2) in the axial direction, for the electrical connection of the pump assembly.

4. A circulation pump assembly according to one of the preceding claims, **characterised in that** an electric drive motor is provided which comprises a stator arranged in a stator housing (2) and having a multitude of coils each with at least at least one electrical connection (12), wherein the at least one electric connection (12) of each individual coil is led out of the stator housing (2).

5. A circulation pump assembly according to claim 4, **characterised in that** each electrical connection (12) in each case at the axial side is led out of the stator housing (2) preferably at an angular position of the respective associated coil.

6. A circulation pump assembly according to claim 5, **characterised in that** the electric connections (12) on the axial end-side (10) of the stator housing (2) are arranged in a manner uniformly distanced to one another in their angular positions.

7. A circulation pump assembly according to one of the preceding claims 4 to 6, **characterised in that** the electric connection (12) end in each case in at least one plug contact (12) at the axial end-side (10) of the stator housing (2).

8. A circulation pump assembly according to one of the preceding claims 4 to 7, **characterised in that** the electrical connections (12) of the individual coils are connected to one another outside the stator housing (2).

9. A circulation pump assembly according to one of the preceding claims 4 to 8, **characterised in that** the stator housing (2) preferably at its axial end-side (10) comprises several recesses (32) which are arranged at different angular positions and are for receiving a sensor element (30).

10. A circulation pump assembly according to claim 9, **characterised in that** the recesses (32) are designed for receiving a position sensor, in particular a magnetic field sensor, between the coils of the stator.

11. A circulation pump assembly according to one of the claims 4 to 10, **characterised in that** the connection element (16) may be applied from the outside preferably in the axial direction (X) onto the stator housing (2) and connects the electrical connections (12) of the individual coils to one another.

12. A circulation pump assembly according to one of the preceding claims, **characterised in that** the connection element (16) connects the individual coils electrically to the electric connections in a terminal box (4) of the pump assembly.

13. A circulation pump assembly according to one of the preceding claims, **characterised in that** a corresponding contact element (18) is provided in the connection element (16) for each connection (12) of the coils.

14. A circulation pump assembly according to one of the preceding claims, **characterised in that** the connection element (16) may be applied onto the stator housing at any angular position which is defined by the number of electrical connections (12) or of the coils.

## Revendications

1. Groupe moto-pompe de circulation pour mise en oeuvre dans une installation de chauffage ou en tant que pompe à eau froide dans la technique de climatisation, comprenant un carter de stator (2) et un élément de raccordement (16) pour le raccordement électrique des bobines du stator, l'élément de raccordement (16) faisant partie d'une boîte à bornes (4) qui contient les composants électroniques et électriques de commande et de régulation de la pompe, **caractérisé en ce que** la boîte à bornes (4) est disposée à l'extérieur du carter de stator (2) à distance de celui-ci de façon à former une chambre d'écartement (34) en direction axiale entre une face avant (10) du carter de stator (2) et l'élément de raccordement (16) et de façon que l'eau de condensation puisse s'écouler entre le carter de stator (2) et l'élément de raccordement (16) sans pénétrer dans l'élément de raccordement (16).

2. Groupe moto-pompe de circulation selon la revendication 1, **caractérisé en ce qu'**est formé sur l'élément de raccordement (16) un élément capteur (30) s'étendant en direction axiale à distance de l'élément de raccordement (16), qui peut être inséré dans l'un des évidements (32) du carter de stator (2).

3. Groupe moto-pompe de circulation selon l'une des revendications précédentes, **caractérisé en ce que** la boîte à bornes (4) est enfichable en direction axiale sur le carter de stator (2) pour le raccordement électrique du groupe moto-pompe.

4. Groupe moto-pompe de circulation selon l'une des revendications précédentes, **caractérisé en ce qu'**est prévu un moteur d'entraînement électrique qui présente un stator disposé dans un carter de stator (2) et pourvu d'une pluralité de bobines comprenant chacune au moins une borne électrique (12), ladite au moins une borne électrique (12) de chaque bobine individuelle faisant saillie du carter de stator (2).

5. Groupe moto-pompe de circulation selon la revendication 4, **caractérisé en ce que** chaque borne électrique (12) fait saillie du carter de stator (2) respectivement côté axial, de préférence au niveau d'une position angulaire de chaque bobine associée.

6. Groupe moto-pompe de circulation selon la revendication 5, **caractérisé en ce que** les bornes électriques (12) sur la face avant axiale (10) du carter de stator (2) sont espacées les unes des autres de façon équidistante dans leurs positions angulaires.

7. Groupe moto-pompe de circulation selon l'une des revendications 4 à 6, **caractérisé en ce que** les bornes électriques (12) se terminent respectivement dans au moins un contact à fiches (12) sur la face avant axiale (10) du carter de stator (2).

8. Groupe moto-pompe de circulation selon l'une des revendications 4 à 7, **caractérisé en ce que** les bornes électriques (12) des différentes bobines sont interconnectées à l'extérieur du carter de stator (2).

9. Groupe moto-pompe de circulation selon l'une des revendications 4 à 8, **caractérisé en ce que** le carter de stator (2) présente, de préférence sur sa face avant axiale (10), plusieurs évidements (32) disposés dans des positions angulaires différentes pour recevoir un élément capteur (30).

10. Groupe moto-pompe de circulation selon la revendication 9, **caractérisé en ce que** les évidements (32) sont conçus pour recevoir un capteur de position, en particulier un capteur de champ magnétique, entre les bobines du stator.

11. Groupe moto-pompe de circulation selon l'une des revendications 4 à 10, **caractérisé en ce que** l'élément de raccordement (16) est adaptable sur le carter de stator (2) de l'extérieur, de préférence dans la direction axiale (X), et interconnecte les bornes électriques (12) des différentes bobines.

12. Groupe moto-pompe de circulation selon l'une des revendications précédentes, **caractérisé en ce que** l'élément de raccordement (16) relie électriquement les différentes bobines avec des bornes électriques dans une boîte à bornes (4) du groupe moto-pompe.

13. Groupe moto-pompe de circulation selon l'une des revendications précédentes, **caractérisé en ce qu'**est prévu dans l'élément de raccordement (16) un élément de contact (18) correspondant à chaque borne (12) des bobines.

14. Groupe moto-pompe de circulation selon l'une des revendications précédentes, **caractérisé en ce que** l'élément de raccordement (16) est adaptable sur le carter de stator dans chaque position angulaire quelconque prédéterminée par le nombre de bornes électriques (12) ou de bobines.
